# FASCICULE DE BREVET EUROPEEN

(11) **EP 0 407 248 B1**
(45) Date de publication et mention de la délivrance du brevet: **03.02.1993**
(21) Numéro de dépôt: 90401699.5
(22) Date de dépôt: 18.06.1990
(51) Int. Cl.: F42B 3/04

(54) **Générateur pyrotechnique de gaz froids et son procédé de fabrication**
Pyrotechnischer Generator für kühles Gas und Verfahren zu dessen Herstellung
Cold gas pyrotechnic generator and manufacturing process thereof

(30) Priorité: 05.07.1989 FR 8908989
(43) Date de publication de la demande: 09.01.1991
(73) Titulaire: S.N.C. LIVBAG, 91710 Vert Le Petit (FR)
(72) Inventeur: Cord, Paul Philippe, F-75009 Paris (FR); Perotto, Christian, F-91610 Ballancourt (FR); Morner, Bengt, S-436 55 Hovas (SE); Vavalidis, Kyriakos, F-76220 Gournay en Bray (FR)
(74) Mandataire: Pech, Bernard

(56) Documents cités:
- FR-A- 2 418 905
- US-A- 3 985 076
- US-A- 4 137 847
- US-A- 4 414 902

## Description

La présente invention se rapporte au domaine de la sécurité automobile et en particulier à la protection, en cas de choc, des passagers d'un véhicule automobile par gonflement d'un coussin protecteur au moyen des gaz de combustion provenant d'un générateur pyrotechnique de gaz froids. Plus précisément l'invention concerne un tel générateur de gaz froids à chambres coaxiales soudées et un procédé de fabrication applicable à un tel générateur permettant son chargement en matière pyrotechnique après soudure des composants mécaniques constituant les différentes chambres.

On a envisagé depuis de nombreuses années déjà d'assurer la protection des passagers d'un véhicule automobile, en cas de choc, par gonflement d'un coussin qui vient s'interposer entre le corps du passager et le tableau de bord du véhicule. Le gonflement du coussin est assuré par une source de gaz déclanchée par un détecteur d'accélération ou de décélération étalonné au-dessus d'un certain seuil. Pour assurer la fiabilité du dispositif de protection dans le temps, la source de gaz doit présenter à la fois une bonne conservation dans le temps et un temps de réponse très court, de l'ordre de quelques dizaines de millisecondes seulement.

Ces deux impératifs ont amené l'homme de métier à préférer, comme source de gaz, les générateurs pyrotechniques de gaz froids qui se présentent sous forme de boitiers métalliques constitués essentiellement par un fond et un couvercle déterminant à l'intérieur du boitier une chambre d'allumage contenant un dispositif d'allumage rélié au détecteur d'accélération ou de décélération, une chambre de combustion contenant une composition pyrotechnique génératrice de gaz et une ou plusieurs chambres de filtration et de refroidissement des gaz. Ces générateurs de gaz devant présenter un encombrement réduit, et notamment une hauteur réduite, de manière à pouvoir être logés en particulier dans les volants des véhicules automobiles, l'homme de métier adopte en général pour ces générateurs une forme cylindrique, la chambre d'allumage étant centrale et les chambres de combustion et de filtration étant de forme annulaires et disposées soit les unes à l'intérieur des autres, soit les unes au-dessus des autres, la chambre de combustion entourant tout ou partie de la chambre d'allumage. De tels générateurs sont par exemples décrits dans les brevets US-A-4 547 342, US-A-4 578 247 ou US-A-4 590 041.

La composition pyrotechnique utilisée est en général un mélange d'azoture de sodium et d'oxydants minéraux. L'azoture de sodium étant un composé explosif sensible à l'humidité il est recommandé que le générateur de gaz soit scellé de manière étanche et non démontable d'une part pour protéger la composition de l'humidité et d'autre part pour empêcher toute récupération inoportune du constituant explosif. Pour ces raisons le fond et le couvercle constituant le boitier du générateur sont le plus souvent soudés l'un à l'autre, la soudure pouvant avantageusement être réalisée par friction ou par inertie comme indiqué dans les brevets cités ci-dessus.

Toutefois cette solution présente un inconvénient majeur. La plupart des configurations adoptées jusqu'à présent pour les générateurs de gaz ne permettent pas d'assurer leur remplissage en matière pyrotechnique après soudure, aussi est-il nécessaire de les remplir en matière pyrotechnique avant soudure et d'effectuer cette dernière en présence de matière pyrotechnique contenant un fort taux d'azoture de sodium, opération qui est loin d'être sans danger.

A la connaissance de la demanderesse, une tentative a été faite pour permettre un tel remplissage. Cette tentative se trouve décrite dans le brevet américain US-A-4 249 673. Ce brevet décrit un générateur de gaz de révolution constitué par un fond et un couvercle définissant deux chambres concentriques : une chambre interne d'allumage et de combustion et une chambre annulaire périphérique de refroidissement et de filtration. Le fond du générateur comporte un orifice central par lequel il est possible, après assemblage du générateur, d'introduire les pastilles de composition pyrotechnique et ensuite le dispositif d'allumage dans la chambre interne. Si la solution décrite dans ce brevet permet bien d'assurer le remplissage du générateur en matière pyrotechnique après assemblage du fond et du couvercle, elle présente cependant deux autres inconvénients majeurs. De manière à pouvoir assurer le remplissage des pastilles et l'introduction du dispositif d'allumage, on est obligé de donner au générateur une hauteur très supérieure à celle de l'allumeur, ce qui ne permet pas de respecter les normes imposées par les constructeurs de véhicules automobiles qui demandent des générateurs "plats" dont la hauteur ne dépasse pratiquement pas celle des allumeurs. Par ailleurs, après chargement, les pastilles de composition pyrotechnique se trouvent disposées autour de l'allumeur et au-dessus de ce dernier ce qui ne permet pas d'assurer la symétrie de l'allumage et de l'écoulement des gaz dans le générateur, symétrie qui est nécessaire si l'on veut des temps de réponse très courts sans risque de surpression dans le générateur.

L'homme de métier ne dispose donc pas à l'heure actuelle d'un générateur de gaz présentant une bonne symétrie d'allumage et d'écoulement des gaz et pouvant être chargé de manière sûre en matière pyrotechnique après soudure des éléments constitutifs de son boitier.

L'objet de la présente invention est précisement de proposer à l'homme de métier un tel générateur ainsi qu'un procédé de fabrication et de remplissage de ce générateur.

L'invention concerne donc un générateur pyrotechnique de gaz froids comprenant un boitier de révolution muni d'orifices externes et constitué par un fond et par un couvercle fixés transversalement l'un à l'autre, le dit fond et le dit couvercle définissant :
- un conduit central interne d'allumage dans lequel est placé un dispositif d'allumage,
- une chambre intermédiaire annulaire contenant des éléments de composition pyrotechnique génératrice de gaz,
- une chambre contenant des moyens de filtration, et communiquant avec l'extérieur du générateur grâce aux dits orifices externes,

les dites chambres étant en communication par des orifices intermédiaires, le dit générateur étant caractérisé en ce que le dit boîtier de révolution détermine, entre le dit conduit central interne et la dite chambre intermédiaire annulaire, une ouverture latérale dont la hauteur est supérieure à la plus grande dimension des dits éléments de composition pyrotechnique génératrice de gaz.

Préférentiellement la dite ouverture latérale est continue.

Selon une réalisation préférée de l'invention le dit fond comporte :
- une paroi latérale externe,
- une amorce de cloison intermédiaire cylindrique,
- une ouverture circulaire centrale bordéé par une amorce de cloison interne cylindrique,

et le dit couvercle comporte quant à lui :
- une paroi latérale externe comportant les dits orifices externes,
- une cloison intermédiaire cylindrique comportant les dits orifices intermédiaires, cette cloison ayant le même diamètre que l'amorce de cloison intermédiaire portée par le dit fond,
- une amorce de cloison interne cylindrique de diamètre légèrement inférieur au diamètre de l'amorce de cloison interne portée par le dit fond,

la dite ouverture latérale étant disposée entre l'amorce de cloison interne portée par le dit fond et l'amorce de cloison interne portée par le dit couvercle.

Les dits éléments de composition pyrotechnique génératrice de gaz sont avantageusement calés par un moyen de calage expansible qui peut être constitué par une toile grillagée enroulée sur elle-même et placée en appui sur les amorces de cloison interne portées par le dit fond et par le dit couvercle.

Selon un autre mode de réalisation préférée de l'invention, le dit couvercle comporte une ouverture circulaire centrale de diamètre légèrement inférieur au diamètre de l'ouverture circulaire centrale portée par le dit fond, la dite ouverture circulaire centrale portée par le couvercle étant bordée par la dite amorce de cloison interne portée par ce dernier, la surface latérale interne de la dite amorce de cloison interne étant filetée.

Selon une dernière variante préférée de l'invention, le dit dispositif d'allumage se compose d'une part d'une virole pouvant se visser dans le dit conduit central interne, la dite virole comportant sur toute sa surface latérale des fentes venant en regard de la dite ouverture latérale et mettant en communication la dite chambre intermédiaire annulaire avec le dit conduit central interne, et d'autre part d'un allumeur pyrotechnique pouvant se fixer à l'intérieur de la dite virole.

L'invention concerne également un procédé de fabrication d'un tel générateur pyrotechnique de gaz froids, procédé caractérisé en ce que :
- i) dans une première étape on constitue le dit boîtier par assemblage du dit couvercle et du dit fond contenant les dits moyens de filtration,
- ii) dans une seconde étape, le boîtier ainsi constitué est fixé sur un dispositif tournant et après mise en rotation du boîtier, les éléments de composition pyrotechnique sont déversés dans la dite ouverture latérale de la dite chambre intermédiaire annulaire à l'intérieur de laquelle ils sont maintenus grâce à la force centrifuge imprimée au boîtier,
- iii) dans une troisième étape, on introduit dans le conduit central interne les moyens de calage ainsi que le dispositif d'allumage.

Selon une variante préférée de réalisation de l'invention l'assemblage du fond et du couvercle est réalisé par soudure, et notamment par soudure par friction ou par soudure par inertie.

Selon une autre variante préférée de l'invention, dans la deuxième étape le boîtier est fixé sur un tour à axe horizontal, dont la vitesse de rotation, en cours de chargement du boîtier, est supérieure à 100 tours par minute.

Enfin selon une dernière variante préférée, en cours de chargement, le boîtier est soumis à des vibrations.

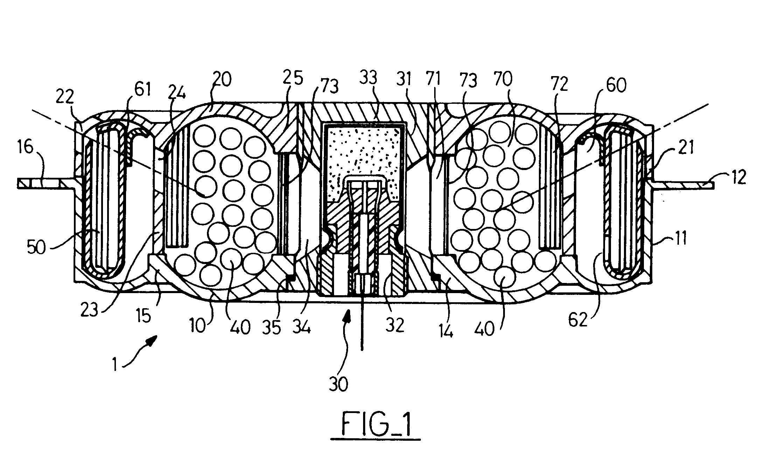

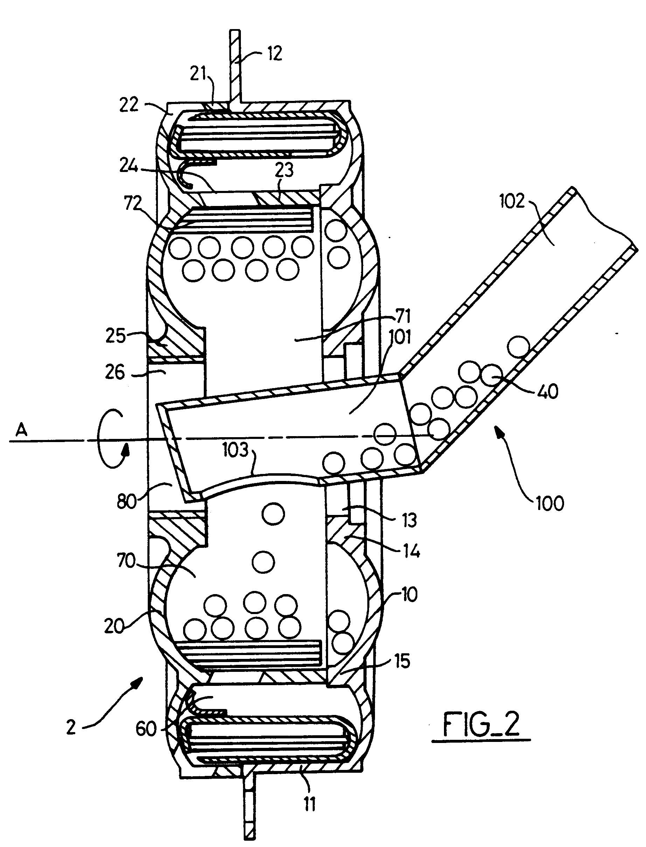

On donne ci-après une description détaillée de l'invention en se référant aux figures 1 et 2 qui illustrent la réalisation préférée de l'invention.
- la figure 1 représente, vu en coupe, un générateur pyrotechnique de gaz froids selon l'invention,
- La figure 2 représente, vu également en coupe, le boîtier du générateur représenté à la figure 1 en cours de chargement.

Un générateur pyrotechnique 1 de gaz froids selon l'invention comprend de manière caractéristique :
a) un boîtier 2 de révolution constitué par un fond 10 et par un couvercle 20 fixés transversalement l'un à l'autre,
b) un dispositif d'allumage 30,
c) des éléments 40 de composition pyrotechnique génératrice de gaz,
d) des moyens de filtration 50.

Comme représenté sur les figures, le fond 10 a sensiblement l'allure d'une cuvette et comporte une paroi latérale externe 11 qui peut être terminée par un rebord plat 12. Ce rebord plat 12 servira alors de rebord de fixation pour le générateur et sera avantageusement muni de perforations 16 destinées à permettre le passage des organes de fixation du générateur au bâti du véhicule automobile.

Le fond 10 comporte également une ouverture centrale circulaire 13 bordée par une amorce de cloison interne cylindrique 14. Par ailleurs le fond 10 comporte une amorce de cloison intermédiaire cylindrique 15 située entre l'amorce de cloison interne 14 et la paroi latérale externe 11.

Le couvercle 20 comporte une paroi latérale externe 21 de même épaisseur et de même diamètre que la paroi latérale externe 11 portée par le fond 10. Cette paroi latérale externe 21 portée par le couvercle 20 comprend des orifices externes 22 destinés à permettre l'évacuation des gaz générés par le générateur. Le couvercle 20 porte par ailleurs une cloison intermédiaire cylindrique 23 de même épaisseur et de même diamètre que l'amorce de cloison intermédiaire 19 portée par le fond 10.

La hauteur de cette cloison intermédiaire 23 portée par le couvercle 20 est telle qu'elle vient au contact de l'amorce de cloison 15 portée par le fond 10 lorsque ce dernier est assemblé au couvercle 20. La dite cloison intermédiaire 23 comporte des orifices intermédaires 24 destinés à laisser passer les gaz produits par le générateur. Comme représenté sur les figures les orifices externes 22 et les orifices intermédiaires 24 sont avantageusement alignés de manière à pouvoir être formés en une seule opération.

Selon une autre réalisation préférée de l'invention, non représentée sur les figures, les orifices intermédiaires 24 sont fermés par des opercules facilement destructibles sous l'effet de la montée en pression du générateur. Ces opercules peuvent par exemple être réalisés en feuille d'aluminium.
Le fond 10 et le couvercle 20 sont préférentiellement constitués par un métal léger tel que l'aluminium ou un alliage d'aluminium. Ces pièces peuvent avantageusement être fabriquées par formage à froid. Lorsqu' ils sont fixés transversalement l'un à l'autre, le fond 10 et le couvercle 20 constituent ensemble un boîtier 2 définissant de manière caractéristique :
- un conduit central interne 80 communiquant avec l'extérieur grâce à l'ouverture centrale circulaire 13 portée par le fond 10,
- une chambre périphérique annulaire 60 comprise entre les parois latérales 11 et 21 d'une part et la cloison intermédiaire 23 et l'amorce de cloison intermédiaire 15 d'autre part,
- une chambre intermédiaire annulaire 70 comprise entre la chambre périphérique 60 et le conduit central interne 80.

De manière caractéristique et indispensable à la mise en oeuvre de l'invention, comme il sera expliqué plus loin, le boîtier 2 de révolution détermine, entre le conduit central interne 80 et la chambre intermédiaire annulaire 70 une ouverture latérale 71 située entre l'amorce de cloison interne 14 portée par le fond 10 et le couvercle 20, la hauteur de cette ouverture latérale 71 étant supérieure à la plus grande dimension des éléments 40 de composition pyrotechnique décrits ci-après.

Par ailleurs on observera que la chambre annulaire intermédiaire 70 communique avec la chambre périphérique 60 grâce aux orifices intermédaires 24 et que la chambre périphérique 60 communique avec l'extérieur grâce aux orifices externes 22.

Selon la réalisation préférée représentée aux figures 1 et 2, le couvercle 20 comprend une ouverture centrale circulaire 26 de diamètre légèrement inférieur au diamètre de l'ouverture centrale 13 portée par le fond 10. L'ouverture 26 est bordée par une amorce de cloison cylindrique interne 29 déterminant un conduit central fileté 80. Dans ce cas l'ouverture latérale 71 est comprise entre l'amorce de cloison interne 14 portée par le fond 10 et l'amorce de cloison interne 25 portée par le couvercle 20. Comme représenté aux figures 1 et 2, la dite ouverture latérale 71 définie entre le conduit interne 80 et la chambre annulaire intermédiaire 70 est préférentiellement continue.

La chambre périphérique annulaire 60 est utilisée comme chambre de refroidissement et de filtration et elle contient des moyens de filtration et de refroidissement 50 connus de l'homme de métier tels que des grilles et des granulés d'agents de refroidissement comme le bicarbonate de sodium. Ces moyens 50 de filtration et de refroidissement sont maintenus en place par un cache métallique souple 61 prenant appui sur les surfaces internes du fond 10 et du couvercle comme représenté sur les figures. Ce cache métallique 61 comporte des orifices d'admission des gaz 62 préférentiellement situés dans la partie basse du dit cache 61 prenant appui sur le fond 10.

La chambre intermédiaire annulaire 70 est utilisée comme chambre de combustion et contient des éléments 40 de composition pyrotechnique génératrice de gaz. Ces éléments sont préférentiellement sous forme de pastilles comme représenté sur les figures. Comme composition pyrotechnique génératrice de gaz on utilisera avantageusement les compositions à base d'azoture de sodium. Les compositions préférées dans le cadre de la présente invention sont les compositions contenant entre 60% et 82% en poids d'azoture de sodium, entre 15% et 35% en poids de sulfure de molybdène et entre 2% et 9% en poids de soufre. Seront particulièrement préférées parmi ces compositions, celles qui auront subi un traitement thermique à 120°C destiné à améliorer leurs propriétés mécaniques, comme décrit dans FR-A-2 645 854.

Comme représenté sur les figures on peut prévoir dans la chambre de combustion 70, du côté des orifices intermédiaires 24 des grilles de préfiltration 72. Les éléments 40 de composition pyrotechnique sont par ailleurs avantageusement calés, du côté de l'ouverture latérale 71 par des moyens de calage 73 expansibles radialement. On utilisera avantageusement, par exemple, comme moyen de calage une toile métallique grillagée enroulée sur elle-même et placée en appui sur les amorces de cloison interne 14 et 25 de manière à venir appuyer sur les éléments 40 de composition pyrotechnique.

A l'intérieur du conduit central interne 80 est disposé un dispositif d'allumage 30. Le dispositif d'allumage 30 représenté à la figure 1 se compose d'une part d'une virole 31 et d'autre part d'un allumeur 32. La paroi latérale de la virole 31 comprend une partie supérieure filetée extérieurement et qui peut être vissée sur le filetage interne porté par l'amorce de cloison interne 25. La paroi latérale de la virole 31 comprend également une partie inférieure venant s'adapter de manière étanche, grâce à un joint d'étanchéité 35, sur la surface interne de l'amorce de cloison interne 14 portée par le fond 10. La partie inférieure de la virole 31 comprend un trou fileté dans lequel peut être vissé l'allumeur 32 qui est un allumeur à déclenchement électrique. Dans le générateur représenté à la figure 1, l'allumeur 32 est un allumeur à prise coaxiale tel que décrit dans FR-A-2 557 689. La virole 31 comporte une partie supérieure pleine 33 et est pourvue sur toute sa paroi latérale de fentes 34 situées en regard de l'ouverture latérale 71 et d'une hauteur sensiblement égale à la hauteur de cette dernière.

Le fonctionnement du générateur selon l'invention est le suivant. Par une impulsion électrique, commandée par le détecteur d'accélération ou de décélération, l'allumeur 32 est mis à feu et provoque lui-même l'allumage des éléments 40 de composition pyrotechnique génératrice de gaz. Les gaz produits par la combustion de ces éléments pénètrent dans la chambre de refroidissement 60 par les orifices intermédiaires 24 après avoir éventuellement brisé les opercules fermant ces orifices. Les gaz pénètrent alors dans les moyens 50 de filtration et de refroidissement grâce aux orifices 62 portés par le cache métallique 61 et quittent, après filtration et refroidissement, le générateur par les orifices externes 22 pour gonfler le coussin attaché au générateur.

L'invention permet ainsi de disposer d'un générateur pyrotechnique de gaz froids à symétrie parfaite d'allumage et d'écoulement des gaz.

Un autre avantage essentiel procuré par la présente invention réside dans le fait que le générateur de gaz peut n'être chargé en produits pyrotechniques qu'après assemblage du fond 10 et du couvercle 20 constitutifs du boîtier 2. Pour ce faire on procède comme suit.

Dans une première étape on constitue le boîtier 2 par assemblage du couvercle 20 avec le fond 10 contenant les moyens de filtration et de refroidissement 50. Pour cela on dispose dans le fond 10 les moyens 50 de filtration et de refroidissement, le cache 61 ainsi que, le cas échéant, les grilles de préfiltration 72 et on assure l'assemblage du fond 10 avec le couvercle 20 par tout moyen approprié. Comme moyen d'assemblage on préfèrera cependant, pour les raisons indiquées plus haut, la soudure du fond 10 avec le couvercle 20 d'une part le long de la surface de contact entre la paroi latérale externe 11 et la paroi latérale externe 21 et d'autre part le long de la surface de contact entre l'amorce de cloison intermédiaire 15 et la cloison intermédiaire 23.

Le fond 10 et le couvercle 20 étant de révolution, la soudure est très avantageusement réalisée par friction ou par inertie. La soudure par bombardement électronique est également bien adaptée dans ce cas. Quelle que soit la technique choisie, la soudure peut, en tout état de cause être effectuée en absence de tout élément pyrotechnique et donc dans des conditions de sécurité absolue.

En effet la présence de l'ouverture latérale 71, élément essentiel de l'invention, située entre la chambre 70 de combustion et le conduit central interne 80 et dont la hauteur est supérieure à la plus grande dimension des éléments 40 de composition pyrotechnique, permet d'assurer le remplissage de la chambre 70 après assemblage par soudure du fond 10 avec le couvercle 20.

Pour ce faire, dans une deuxième étape, le boîtier 2 est fixé sur un dispositif tournant tel qu'un tour et après mise en rotation du boîtier, les éléments 40 de composition pyrotechnique sont déversés dans l'ouverture latérale 71 de la chambre 70 à l'intérieur de laquelle ils sont maintenus grâce à la force centrifuge imprimée au boîtier 2 du fait de sa mise en rotation.

Il ne reste plus alors, dans une troisième étape, qu'à introduire dans le conduit central interne 80 le dispositif d'allumage 30, après avoir éventuellement introduit les moyens de calage 73, pour obtenir le générateur complet selon l'invention.

Selon le mode de chargement préféré, représenté à la figure 2, le boîtier 2 est mis sur un tour équipé de mors, l'axe A du tour étant en position horizontale. On fait alors tourner le boîtier et on introduit dans le conduit interne 80 un dispositif d'alimentation 100 constitué par un bec d'alimentation 101 cylindrique de diamètre inférieur au diamètre du conduit 80. Ce bec 101 est prolongé par un tuyau d'alimentation 102 incliné et relié à une trémie d'alimentation non représentée.

Le bec 101 est fermé en biseau et est pourvu dans sa partie inférieure d'une ouverture 103 de diamètre supérieur au diamètre des éléments 40 de composition pyrotechnique. Cette ouverture 103 est située quasiment à l'extrémité du bec 101 qui est positionné de manière à ce que l'ouverture 103 se trouve en regard de l'ouverture latérale 71 de la chambre de combustion 70. La trémie d'alimentation délivre alors la quantité d'éléments 40 de composition pyrotechnique suffisante pour remplir la chambre de combustion 70. Les éléments 40 descendent par le tuyau 102 jusque dans le bec 101 d'où ils tombent par gravité dans la chambre 70 au travers des ouvertures 103 et 71. Les éléments 40 introduits dans la chambre 70 sont maintenus plaqués dans cette dernière en direction de la cloison intermédiaire 23 sous l'effet de la force centrifuge imprimée au boîtier 2.

La demanderesse a constaté que la vitesse de rotation du boîtier 2 doit être au moins égale à 100 tours par minute et qu'une vitesse de 300 tours par minute est en général suffisante pour les éléments de composition pyrotechnique sous forme de pastilles et pour les générateurs habituellement utilisés dans l'industrie automobile. Par ailleurs la demanderesse a également observé que l'on obtient un meilleur coefficient de remplissage de la chambre de combustion 70 en élément 40 si, en cours de chargement, le boîtier 2 est non seulement mis en rotation, mais qu'il est en plus soumis à des vibrations. De telles vibrations préférentiellement longitudinales peuvent par exemple être obtenues en interposant un plateau vibrant électromagnétique entre les mors du tour et le boîtier 2.

Lorsque le chargement en éléments 40 est terminé, on retire le dispositif d'alimentation 100, le boîtier 2 étant maintenu en rotation. On introduit alors la toile métallique grillagée 73, enroulée sur elle-même, dans le conduit interne 80 d'où on la fait pénétrer dans l'ouverture latérale 71, en la laissant alors s'expanser radialement.

On arrête alors le tour et il ne reste plus, dans une dernière étape, qu'à visser la virole 31 puis l'allumeur 32 pour obtenir le générateur complet.

## Revendications

1. Générateur (1) pyrotechnique de gaz froids comprenant un boîtier (2) de révolution muni d'orifices externes (22) et constitue à par un fond (10) et par un couvercle (20) fixés transversalement l'un à l'autre, le dit fond (10) et le dit couvercle (20) définissant :
- un conduit central interne d'allumage (80) dans lequel est placé un dispositif d'allumage (30),
- une chambre intermédiaire annulaire (70) contenant des éléments (40) de composition pyrotechnique génératrice de gaz,
- une chambre (60) contenant des moyens de filtration (50) et communiquant avec l'extérieur grâce aux orifices externes (22),
les deux chambres (60 et 70) étant en communication par des orifices intermédiaires (24),
caractérisé en ce que le boîtier (2) de révolution détermine, entre le conduit central interne (80) et la chambre intermédiaire annulaire (70) une ouverture latérale (71) dont la hauteur est supérieure à la plus grande dimension des dits éléments (40) de composition pyrotechnique génératrice de gaz.

2. Générateur selon la revendication 1 caractérisé en ce que la dite ouverture latérale (71) est continue.

3. Générateur selon la revendication 2 caractérisé en ce que le dit fond (10) comporte :
- une paroi latérale externe (11)
- une amorce de cloison intermédiaire cylindrique (15),
- une ouverture circulaire centrale (13) bordée par une amorce de cloison interne cylindrique (14),
et en ce que le dit couvercle (20) comporte :
- une paroi latérale externe (21) comportant les dits orifices externes (22),
- une cloison intermédiaire cylindrique (23) comportant les dits orifices intermédiaires (24) et de même diamètre que l'amorce de cloison intermédiaire (15),
- une amorce de cloison interne cylindrique (25) de diamètre légèrement inférieur au diamètre de l'amorce de cloison interne (14) portée par le fond (10),
l'ouverture latérale (71) étant disposée entre l'amorce de cloison interne (14) portée par le fond (10) et l'amorce de cloison interne (25) portée par le couvercle (20).

4. Générateur selon la revendication 2 caractérisé en ce que les dits éléments (40) de composition pyrotechnique génératrice de gaz sont calés par un moyen de calage (73) expansible radialement.

5. Générateur selon la revendication 3 caractérisé en ce qui les dits éléments (40) de composition pyrotechnique génératrice de gaz sont calés par une toile grillagée (73) enroulée sur elle-même et placée en appui sur les amorces de cloison interne (14) et (25).

6. Générateur selon la revendication 3 caractérisé en ce que le dit couvercle (20) comporte une ouverture circulaire centrale (26) de diamètre légèrement inférieur au diamètre de l'ouverture circulaire centrale (13) portée par le dit fond (10) et en ce que la dite ouverture (26) est bordée par la dite amorce de cloison interne (25).

7. Générateur selon la revendication 6 caractérisé en ce que la surface latérale interne de la dite amorce de cloison (25) est filetée.

8. Générateur selon la revendication 7 caractérisé en ce que le dit dispositif d'allumage (30) se compose d'une virole (31) pouvant se visser dans le dit conduit central interne (80) et comportant sur toute sa paroi latérale des fentes (34) venant en regard de la dite ouverture latérale (71) ainsi que d'un allumeur pyrotechnique (32) pouvant se fixer à l'intérieur de la dite virole (31).

9. Procédé de fabrication d'un générateur pyrotechnique de gaz froids selon l'une quelconque des revendications 1 à 8 caractérisé en ce que :
- i) dans une première étape on constitue le boîtier (2) par assemblage du couvercle (20) avec le fond (10) contenant les moyens de filtration (50),
- ii) dans une seconde étape, le boîtier (2) ainsi constitué est fixé sur un dispositif tournant et après mise en rotation du boîtier, les éléments (40) de composition pyrotechnique sont déversés dans l'ouverture latérale (71) de la chambre (70) à l'intérieur de laquelle ils sont maintenus grâce à la force centrifuge imprimée au boîtier (2),
- iii) dans une troisième étape, on introduit dans le conduit central interne le dispositif d'allumage (30).

10. Procédé selon la revendication 9 caractérisé en ce que dans la première étape l'assemblage du couvercle (20) avec le fond (10) est réalisé par soudure.

11. Procédé selon la revendication 10 caractérisé en ce que la soudure est obtenue par friction.

12. Procédé selon la revendication 9 caractérisé en ce que dans la deuxième étape le boîtier (2) est fixé sur un tour à axe horizontal.

13. Procédé selon la revendication 12 caractérisé en ce que la vitesse de rotation du boîtier (2) en cours de chargement est supérieure à 100 tours par minute.

14. Procédé selon la revendication 13 caractérisé en ce que, en cours de chargement, le boîtier (2) est soumis à des vibrations.

## Patentansprüche

1. Pyrotechnischer Generator (1) für kalte Gase mit einem rotationssymmetrischen Gehäuse (2), das mit äußeren Öffnungen (22) versehen und aus einem Boden (10) sowie einem Deckel (20), die quer untereinander befestigt sind, zusammengesetzt ist, wobei der Boden (10) und der Deckel (20) abgrenzen:
- eine innere zentrale Zündleitung (80), in der eine Zündeinrichtung (30) angeordnet ist,
- eine ringförmige Zwischenkammer (70), die Elemente (40) pyrotechnischer gaserzeugender Zusammensetzung enthält,
- eine Kammer (60), die Filtriermittel (50) enthält und mit dem Äußeren dank den äußeren Öffnungen (22) in Verbindung steht, wobei die zwei Kammern (60 und 70) durch Zwischenöffnungen (24) in Verbindung sind,
**dadurch** **gekennzeichnet**,
daß das rotationssymmetrische Gehäuse (2) zwischen der inneren zentralen Leitung (80) und der ringförmigen Zwischenkammer (70) eine seitliche Öffnung (71) bestimmt, deren Höhe größer als die größte Abmessung der Elemente (40) pyrotechnischer gaserzeugender Zusammensetzung ist.

2. Generator nach dem Anspruch 1,
dadurch gekennzeichnet,
daß die seitliche Öffnung (71) ununterbrochen ist.

3. Generator nach dem Anspruch 2,
dadurch gekennzeichnet,
daß der Boden (10) aufweist:
- eine äußere Seitenwand (11),
- einen Ausgangsteil einer zylindrischen Zwischenwand (15),
- eine kreisförmige zentrale Öffnung (13), die von einem Ausgangsteil einer zylindrischen Innenwand (14) eingefaßt ist,
und daß der Deckel (20) aufweist:
- eine äußere Seitenwand (21) mit den äußeren Öffnungen (22),
- eine zylindrische Zwischenwand (23) mit den Zwischenöffnungen (24) und von gleichem Durchmesser wie der Zwischenwandausgangsteil (15),
- einen Ausgangsteil einer zylindrischen Innenwand (25) mit etwas geringerem Durchmesser als dem Durchmesser des vom Boden (10) getragenen Innenwandausgangsteils (14),
wobei die seitliche Öffnung (71) zwischen dem vom Boden (10) getragenen Innenwandausgangsteil (14) und dem vom Deckel (20) getragenen Innenwandausgangsteil (25) angeordnet ist.

4. Generator nach dem Anspruch 2,
dadurch gekennzeichnet,
daß die Elemente (40) pyrotechnischer gaserzeugender Zusammensetzung durch ein radial expandierbares Keilmittel (73) verkeilt sind.

5. Generator nach dem Anspruch 3,
dadurch gekennzeichnet,
daß die Elemente (40) pyrotechnischer gaserzeugender Zusammensetzung durch ein Gittergewebe (73) verkeilt sind, das um sich selbst autgerollt und in Anlage auf den Innenwandausgangsteilen (14) und (25) angeordnet ist.

6. Generator nach dem Anspruch 3,
dadurch gekennzeichnet,
daß der Deckel (20) eine kreisförmige zentrale Öffnung (26) mit etwas geringerem Durchmesser als dem Durchmesser der vom Boden (10) getragenen kreisförmigen zentralen Öffnung (13) aufweist und daß die Öffnung (26) vom Innenwandausgangsteil (25) eingefaßt ist.

7. Generator nach dem Anspruch 6,
dadurch gekennzeichnet,
daß die innere Seitenfläche des Wandausgangsteils (25) mit Gewinde versehen ist.

8. Generator nach dem Anspruch 7,
dadurch gekennzeichnet,
daß die Zündeinrichtung (30) aus einem Ring (31), der sich in die innere zentrale Leitung (80) schrauben läßt und auf seiner ganzen Seitenwand Schlitze (34) aufweist, die der seitlichen Öffnung (71) zugewandt werden, und aus einem pyrotechnischen Zünder (32) besteht, den man im Inneren des Ringes (31) befestigen kann.

9. Verfahren zur Herstellung eines pyrotechnischen Generators für kalte Gase nach irgendeinem der Ansprüche 1 bis 8,
**dadurch** **gekennzeichnet**, daß:
- i) man in einer ersten Stufe das Gehäuse (2) durch Vereinigen des Deckels (20) mit dem die Filtriermittel (50) enthaltenden Boden (10) bildet,
- ii) das so gebildete Gehäuse (2) in einer zweiten Stufe auf einer Dreheinrichtung befestigt wird und nach Rotationsbeginn des Gehäuses die Elemente (40) pyrotechnischer Zusammensetzung in die seitliche Öffnung (71) der Kammer (70) geschüttet werden, in deren Innerem sie dank der dem Gehäuse verliehenen Zentrifugalkraft gehalten werden, und
- iii) man in einer dritten Stufe in die innere zentrale Leitung die Zündeinrichtung (30) einführt.

10. Verfahren nach dem Anspruch 9,
dadurch gekennzeichnet,
daß in der ersten Stufe die Vereinigung des Deckels (20) mit dem Boden (1,0) durch Schweißen vorgenommen wird.

11. Verfahren nach dem Anspruch 10,
dadurch gekennzeichnet,
daß das Schweißen durch Reibung erhalten wird.

12. Verfahren nach dem Anspruch 9,
dadurch gekennzeichnet,
daß in der zweiten Stufe das Gehäuse (2) auf einem Drehgerät mit horizontaler Achse befestigt wird.

13. Verfahren nach dem Anspruch 12,
dadurch gekennzeichnet,
daß die Drehgeschwindigkeit des Gehäuses (2) im Beladungsverlauf über 100 U/min ist.

14. Verfahren nach dem Anspruch 13,
dadurch gekennzeichnet,
daß das Gehäuse (2) im Beladungsverlauf Schwingungen ausgesetzt wird.

## Claims

1. Cold-gas pyrotechnic generator (1) comprising a casing (2) of revolution provided with outer orifices (22) and consisting of a base (10) and a cover (20) fastened together transversely, the said base (10) and the said cover (20) establishing:
- an inner central ignition channel (80) in which an ignition device (30) is placed,
- an annular intermediate chamber (70) containing elements (40) of a gas-generating pyrotechnic composition,
- a chamber (60) containing filtering means (50) and communicating with the outside through outer orifices (22),
the two chambers (60 and 70) being in communication through intermediate orifices (24),
characterised in that the casing (2) of revolution defines, between the inner central channel (80) and the annular intermediate chamber (70), a lateral opening (71) whose height is greater than the largest dimension of the said elements (40) of a gas-generating pyrotechnic composition.

2. Generator according to Claim 1, characterised in that the said lateral opening (71) is continuous.

3. Generator according to Claim 2, characterised in that the said base (10) has:
- an outer lateral wall (11)
- a cylindrical, intermediate initial partition section (15),
- a central circular opening (13) bordered by a cylindrical, inner initial partition section (14),
and in that the said cover (20) has:
- an outer lateral wall (21) which has the said outer orifices (22),
- a cylindrical intermediate partition (23) which has the said intermediate orifices (24) and has the same diameter as the intermediate initial partition section (15),
- a cylindrical, inner initial partition section (25) with a diameter slightly less than the diameter of the inner initial partition section (14) carried by the base (10),
the lateral opening (71) being arranged between the inner initial partition section (14) carried by the base (10) and the inner initial partition section (25) carried by the cover (20).

4. Generator according to Claim 2, characterised in that the said elements (40) of a gas-generating pyrotechnic composition are immobilized by a radially expansible immobilization means (73).

5. Generator according to Claim 3, characterised in that the said elements (40) of a gas-generating pyrotechnic composition are immobilized by a wire mesh (73) wound around itself and placed so as to bear against the inner initial partition sections (14) and (25).

6. Generator according to Claim 3, characterised in that the said cover (20) has a central circular opening (26) with a diameter slightly less than the diameter of the central circular opening (13) carried by the said base (10) and in that the said opening (26) is bordered by the said inner initial partition section (25).

7. Generator according to Claim 6, characterised in that the inner lateral surface of the said initial partition section (25) is threaded.

8. Generator according to Claim 7, characterised in that the said ignition device (30) comprises a ring (31) which can be screwed into the said inner central channel (80) and having over its entire lateral wall slots (34) which can face the said lateral opening (71) as well as a pyrotechnic igniter (32) which can be fastened inside the said ring (31).

9. Method for manufacturing a cold-gas pyrotechnic generator according to any one of Claims 1 to 8, characterised in that:
- i) in a first stage, the casing (2) is formed by assembling the cover (20) with the base (10) containing the filtering means (50),
- ii) in a second stage, the casing (2) thus formed is fastened onto a rotating device and, after the casing has been set in rotation, the elements (40) of a pyrotechnic composition are poured into the lateral opening (71) of the chamber (70) inside which they are held by the centrifugal force communicated to the casing (2),
- iii) in a third stage, the ignition device (30) is introduced into the inner central channel.

10. Method according to Claim 9, characterised in that, in the first stage, assembly of the cover (20) with the base (10) is carried out by welding.

11. Method according to Claim 10, characterised in that the welding is obtained by friction.

12. Method according to Claim 9, characterised in that, in the second stage, the casing (2) is fastened onto a horizontal-spindle lathe.

13. Method according to Claim 12, characterised in that the speed of rotation of the casing (2) during loading is greater than 100 revolutions per minute.

14. Method according to Claim 13, characterised in that, during loading, the casing (2) is subjected to vibrations.
